# EUROPEAN PATENT APPLICATION

(11) **EP 0 800 935 A1**
(43) Date of publication of application: **15.10.1997**
(21) Application number: 96935429.9
(22) Date of filing: 24.10.1996
(51) Int. Cl.: B60C 11/03

(54) **PNEUMATIC TIRE**

(30) Priority: 27.10.1995 JP 280955/95
(71) Applicant: THE YOKOHAMA RUBBER CO., LTD., Tokyo, 105 (JP)
(72) Inventor: SHIRAI, Kenichi, Hiratsuka-shi, Kanagawa-ken 254 (JP); KIKUCHI, Teruhiko, Hiratsuka-shi, Kanagawa-ken 254 (JP); SUZUKI, Toshihiko, Hiratsuka-shi, Kanagawa-ken 254 (JP)
(74) Representative: Füchsle, Klaus, Dipl.-Ing.
(86) International application number: JP9603102
(87) International publication number: WO9715464

(57) **Abstract**

A pneumatic tire wherein at least one circumferential groove extending in a tire circumferential direction is disposed on a tread surface and transverse grooves extending in a tire width-wise direction are disposed at a predetermined pitch in the tire circumferential direction in such a manner as to define a large number of blocks by the circumferential groove and transverse grooves. The kinds of lengths of the pitches determined by the transverse grooves are mutually different and at least 5, and a ratio Pa/Pe of the maximum pitch length Pa to the minimum pitch length Pe among these pitches is 1.5 to 1.8. In each pair of adjacent pitches, a ratio of the greater pitch length to the smaller pitch length (greater pitch length/smaller pitch length) is not greater than 1.4, the mean value X as the sum of these ratios (greater pitch length/smaller pitch length) throughout the full tire circumference satisfies the relation 1.1 ≤ X ≤ 1.3.

## Description

### Technical Field:

This invention relates to a pneumatic tire having a block pattern having pitch arrangement of different pitch lengths. More particularly, the present invention relates to a pneumatic tire which can reduce a pattern noise by frequency dispersion while restricting the occurrence of periodical humming sound due to the pitch arrangement.

### Background Art:

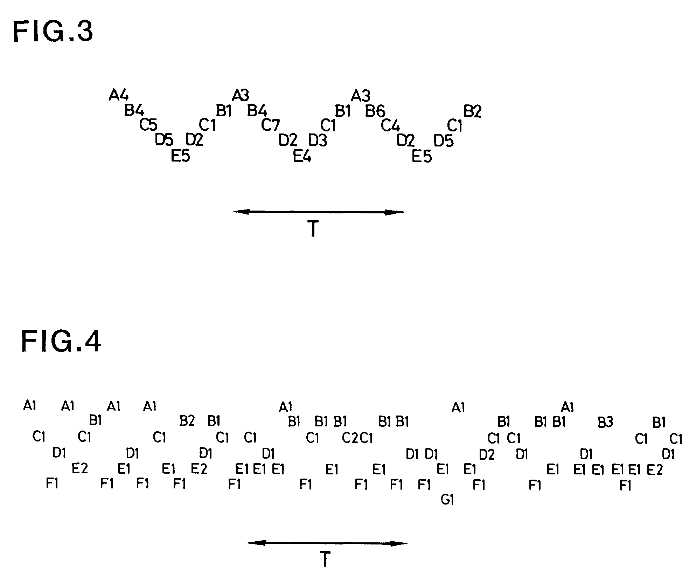

The magnitude of noise resulting from a tread pattern of a tire (pattern noise) greatly varies depending on the kind of tread patterns. Because the noise based on a block pattern is particularly great among the noises, a large number of proposals have been made in the past to reduce the noise. One of the most known noise reduction methods is the proposal to employ a pitch arrangement in which the pitch lengths as the length of one pattern constituent element of the block pattern in a tire circumferential direction are made mutually different. Fig. 3 shows one of such pitch arrangements, and pitches A to E having several different kinds of lengths are periodically arranged in the tire circumferential direction T. Fig. 4 shows another pitch arrangement, wherein pitches A to G having several kinds of mutually different lengths are arranged at random in the tire circumferential direction T. Incidentally, a numeral suffixed to each alphabet represents the number of continuing pitches.

The pitch arrangement using the periodical arrangement described above is effective for achieving so-called turning a pitch noise into "white noise" which reduces the noise resulting from the block pattern by dispersing it to a broad frequency band. However, because the pitches are periodically arranged, a periodical humming sound occurs. Moreover, in the case of a block pattern, non-uniform wear (polygonal wear) is likely to occur due to non-uniformity of the sizes of block groups.

The pitch arrangement employing the random arrangement is free from the problems of the periodical humming sound and the polygonal wear of the blocks, but the pitch noise cannot be easily converted to the white noise. Further, non-uniform wear (cupping) becomes likely to occur due to the drastic change of the sizes of adjacent front and rear blocks.

It is an object of the present invention to provide a pneumatic tire which can convert the pitch noise to the white noise and can restrict the occurrence of the non-uniform wear, too, while restricting the occurrence of the periodical humming sound.

### Disclosure of the Invention:

In a pneumatic tire wherein at least one circumferential groove extending in a tire circumferential direction is disposed on a tread surface, transverse grooves extending in a tire width-wise direction are disposed at a predetermined pitch in the tire circumferential direction in such a manner that a large number of blocks are defined by the circumferential groove and the transverse grooves and the number of kinds of the pitch lengths determined by the transverse grooves is at least five, and a ratio Pa/Pe of the maximum pitch length Pa to the minimum pitch length Pe among these pitches is 1.5 to 1.8, the object of the present invention described above can be accomplished by a pneumatic tire wherein the ratio of the length of the pitch having a greater length to the length of the pitch having a smaller length in each pair of adjacent pitches (greater pitch length/smaller pitch length) is not greater than 1.4, and the mean value X of the sum of these ratios (greater pitch length/smaller pitch length) throughout the tire circumference satisfies the relation 1.1 ≤ X ≤ 1.3.

When the ratio of the pitch lengths of each pair of adjacent pitches (greater pitch length/smaller pitch length) is set to be not greater than 1.4 as described above, the adjacent blocks in the longitudinal direction are allowed to gradually change while being prevented from changing drastically. Therefore, cupping can be suppressed.

Because the mean value X of the pitch length ratios is kept within the range described above, the pitch arrangement can be a random arrangement which exhibits an intermediate tendency between the conventional periodical arrangement and the conventional random arrangement. Therefore, the noise resulting from the tread pattern can be dispersed to a broad frequency band to reduce the noise, and the periodical humming sound can be restricted, too. Further, since non-uniformity of the block groups can be reduced, the occurrence of the polygonal wear can be restricted, as well.

### Brief Description of the Drawings:

Fig. 1 is an exploded view of principal portions of an example of the tread surface of a pneumatic tire according to the present invention;
Fig. 2 is an explanatory view of a part of an example of the pitch arrangement used in the pneumatic tire according to the present invention;
Fig. 3 is an explanatory view showing a conventional example wherein the pitch arrangement is a periodical arrangement; and
Fig. 4 is an explanatory view showing another conventional example wherein the pitch arrangement is a random arrangement.

### Best Mode for Carrying Out the Invention:

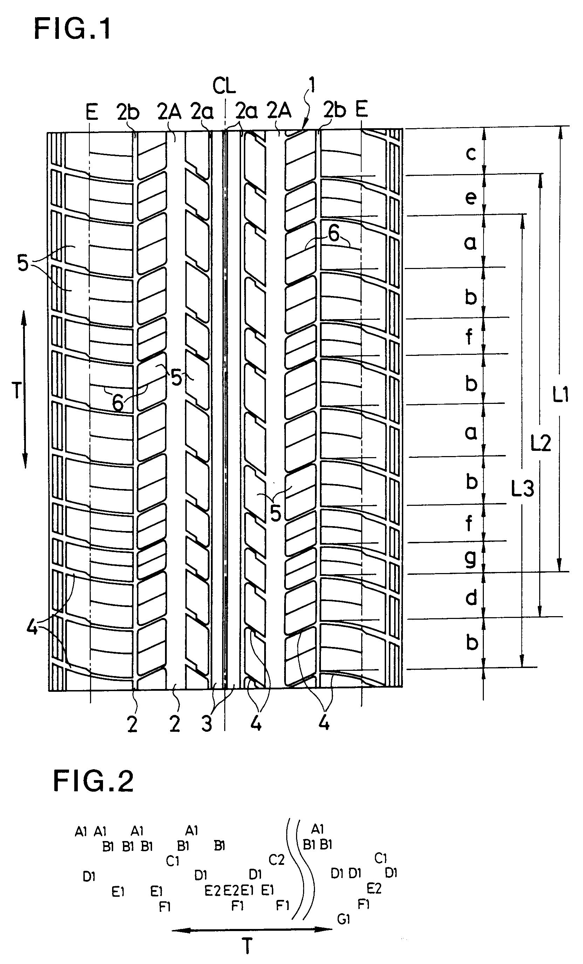

As shown in Fig. 1, a plurality of circumferential grooves 2 extending straight in a tire circumferential direction T are disposed on a tread surface 1. Two wide circumferential grooves 2A are so disposed symmetrically as to interpose a tire equator CL between them. Straight circumferential grooves 2a and 2b having a by far smaller groove width than the circumferential grooves 2A are disposed at the inner side of both circumferential grooves 2A and at the tire outer sides of both circumferential grooves 2A, respectively.

Three circumferential grooves 2a positioned between the circumferential grooves 2A are disposed on the tire equator CL and between the tire equator CL and both circumferential grooves 2A, respectively. Ribs 3 extending in the tire circumferential direction T are formed between these circumferential grooves 2a.

One each circumferential groove 2b having a small width is disposed at the tire outer side of each circumferential groove 2A having a large width, and the tire outer-side portion of this circumferential groove 2b is the tire shoulder portion.

A plurality of transverse grooves 4 extending in the tire width-wise directions are arranged at a predeter-pitch in the tire circumferential direction T between the circumferential grooves 2A and the inner circumferential grooves 2a and at the tire outside portions beyond the tire ground contact ends E from the circumferential grooves 2A. These circumferential grooves 2A, 2a and 2b and the transverse grooves 4 together define a large number of blocks 5 on the tread surface 1.

Reference numeral 6 denotes a slit-like kerf. The kerf 6 is formed in each block 5 outside the circumferential grooves 2A. One kerf 6 is so disposed as to extend along the transverse groove 4 in the tire width-wise direction in each of the blocks 5 positioned between the circumferential grooves 2A and 2b. Both ends of each kerf 6 communicate with the circumferential grooves 2A and 2b. One of the ends of each kerf 6, which is disposed in a block 5 on the tire outer side (outermost) of a circumferential groove 2b, communicates with the circumferential groove 2b, and the other end extends to a tire ground contact end.

The pitches defined by each transverse groove 4 are so arranged that their lengths are of at least five different kinds. Among these pitches, the ratio Pa/Pe of the maximum pitch length Pa to the minimum pitch length Pe is within the range of 1.5 to 1.8. Incidentally, symbols a to g in the drawing represent the pitches having different lengths. In Fig. 1, seven kinds of pitches a to g having mutually different lengths are shown.

In the pneumatic tire of the present invention having the construction described above, the ratio of the greater pitch length to the smaller pitch length (greater pitch length/smaller pitch length) of each pair of adjacent pitches in the longitudinal direction is not greater than 1.4. The mean value X of the sum of these ratios (greater pitch length/smaller pitch length) throughout the full circumference of the tire is so set as to satisfy the relation 1.1 ≤ X ≤ 1.3.

Because the ratio between the lengths of the adjacent pitches (greater pitch length/smaller pitch length) is set to 1.4 at the greatest, a drastic change does not occur in the sizes of the adjacent blocks 5 in the longitudinal direction. Therefore, non-uniform wear (cupping) can be restricted.

Because the mean value X of the sum of the ratios of the greater pitch length to the smaller pitch length (greater pitch length/small pitch length) throughout the full circumference of the tire is set to the range described above, the pitch arrangement can be a random arrangement having an intermediate tendency between a periodical arrangement and a random arrangement. Therefore, the periodical humming sound can be restricted while converting the pitch noise to the white noise. Since non-uniformity of the block group can be reduced, too, the occurrence of non-uniform wear (polygonal wear) can be limited, too.

When the length ratio between the adjacent pitches (greater pitch length/smaller pitch length) exceeds 1.4, the sizes of the adjacent blocks 5 change drastically, and cupping cannot be suppressed effectively.

When the mean value X described above is less than 1.1, the weight of the periodical arrangement becomes heavier and the periodic humming sound and deviation of the block groups on the circumference are likely to occur. When the mean value X exceeds 1.3, on the contrary, the weight of the random arrangement becomes heavier, and dispersion of the resulting frequency gets deteriorated.

In the embodiment of the present invention, the ratio Lmax/Lmin of the maximum value Lmax to the minimum value Lmin is preferably not greater than 1.3. Here, these maximum and minimum values Lmax and Lmin are calculated in the following way. First, the total number of pitches is divided by 8 and the quotient is rounded off to the nearest integer value n. Next, totals of lengths of groups of n continuous pitches, each group deviated by one pitch, that is, the total pitch lengths L1, L2, L3, ... are calculated throughout the full circumference of the tire, and the maximum value Lmax and the minimum value Lmin are selected from among them. When the ratio Lmax/Lmin exceeds, it becomes difficult to suppress the occurrence of the polygonal wear. The reason why the total number of pitches is divided by 8 is because the polygonal wear becomes octagonal in most cases when the polygonal wear occurs.

Because the total pitch lengths L1, L2, L3, ... described above are to examine non-uniformity of the block groups at the time of the ground contact, the ratio Lmax/Lmin may be calculated also by determining 8 to 12 continuous total pitch lengths, each deviated by one pitch.

The number of kinds of the pitch lengths is not particularly limited so long as it is at least 5. However, the upper limit value is preferably 7. The total number of pitches is preferably 60 to 90. Fig. 2 shows the principal portions of a typical pitch arrangement of the present invention when the total number of pitches is 80. In this drawing, alphabets A, B, C ... represent the pitches having mutually different lengths in the same way as in Figs. 3 and 4, and the numerals suffixed to these alphabets represent the number of continuing pitches.

Incidentally, in the present invention, the pitch arrangement is deviated in the tire circumferential direction on both right and left sides of the tire equator CL in Fig. 1. However, the pitch arrangement may be the same on the right and left sides of the tire equator CL (that is, symmetric on the right and left) in place of the pitch arrangement described above. Further, the pitch arrangements may be different on the right and left sides of the tire equator CL within the range described above.

### Example 1:

Tires 1 to 4 of this invention and a Comparative tire each having the maximum value of the ratio of adjacent pitch lengths and the mean value X tabulated in Table 1, a Conventional tire 1 having a 3-periodic arrangement and a Conventional tire 2 having a random arrangement were produced.

The tire size of each of the test tires was 215/65R 15. The tread pattern of each test tire was common and as shown in Fig. 1. In each test tire, the number of kinds of its pitches was 7, the ratio Pa/Pe of the maximum pitch length Pa to the minimum pitch length Pe was 1.6, the total number of pitches was 80 and the ratio Lmax/Lmin of the maximum value Lmax to the minimum value Lmin in the total pitch length L1, L2, L3, ... was as tabulated in Table 1.

Each test tire was fitted to a rim having a rim size of 15 × 6JJ, and after the air pressure was set to 200 KPa, the tires of each kind were fitted to a 2,500 cc passenger car (with two passengers). Noise performance and non-uniform wear resistance evaluation tests were carried out in the following way, and the results tabulated in Table 1 could be obtained.

### Noise Performance:

### 1. Frequency Dispersion:

A feeling test by test drivers was carried out in a test course. The result was evaluated by an index by using the value of the Conventional tire 1 as 100. The greater this value, the higher noise performance by conversion to the white noise.

### 2. Humming Sound:

The feeling test was carried out in the same way as described above, and the result was evaluated by the index by using the value of the Conventional tire 1 as 100. The greater this value, the higher noise performance to the humming sound.

### Non-Uniform Wear:

### 1. Polygonal Wear:

The polygonal wear was evaluated by a peak level of an RPO-order analysis result at 60 km/h by a high speed uniformity machine. The result was evaluated by an index by using the value of the Conventional tire 1 as 100. The greater this value, the higher the polygonal wear resistance.

### 2. Cupping:

A car was driven for 10,000 km on ordinary car roads comprising a highway (62%), city street roads (24%) and mountainous roads (14%). Cupping was evaluated by the ratio of the maximum wear quantity to the minimum wear quantity of the heel-and-toe wear after driving for 10,000 km. The result was evaluated by an index by using the value of the Conventional tire 1 as 100. The greater this value, the higher the cupping resistance.

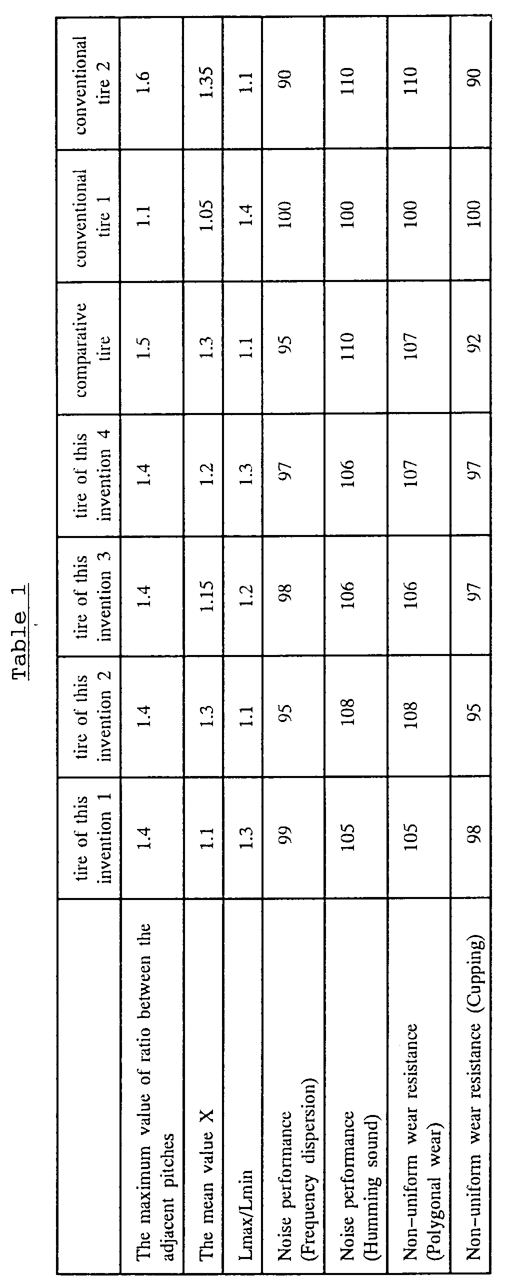

It can be understood from Table 1 that the tires of the present invention could improve the humming sound and the polygonal wear as the problems of the Conventional tire 1 in comparison with the Conventional tire having the periodical arrangement. Further, the tires of the present invention could reduce the noise by conversion of the noise to the white noise and provide the cupping resistance of at least 95 which were approximate to those of the Conventional tire 1. It could be understood further that the tires of the present invention could improve the Conventional tire 2 having the problems with the noise reduction by the white noise and with the cupping resistance.

### Example 2:

A test tire having the same tire size as described above and a ratio Lmax/Lmin of the maximum value Lmax to the minimum value Lmin of the total pitch length in the tread pattern shown in Fig. 1 of 1.4 was produced. The maximum value of the ratio between the adjacent pitches in this test tire was 1.4 and the mean value X was 1.1. The number of kinds of the pitches was 7, Pa/Pe was 1.6, and the total number of pitches was 80.

Noise performance and non-uniform wear resistance of this test tire were evaluated in the same way as described above. Noise performance had frequency dispersion of 100, humming sound of 105, polygonal wear resistance of 100 and cupping resistance of 95. It could be understood from these results and from Table 1 given above that when Lmax/Lmin exceeded 1.3 and became 1.4, the effect of improvement of the polygonal wear resistance could not be obtained, and the polygonal wear was likely to occur in the same way as in the Conventional tire 1.

As described above, since the ratio of the pitch length between the greater pitch and the smaller pitch of each pair of adjacent pitches (greater pitch length/smaller pitch length) was set to maximum 1.4, a drastic change does not occur in the adjacent blocks in the longitudinal direction. As a result, cupping can be suppressed.

Because the mean value X of the ratios between the lengths of each pair of adjacent pitches (greater pitch length/smaller pitch length) is kept within the range described above, the pitch arrangement can be made to be the random arrangement having the intermediate tendency between the periodical arrangement and the random arrangement. Accordingly, while the noise resulting from the tread pattern is reduced by dispersing it to a broad frequency band, the periodical humming sound can be suppressed. Because non-uniformity of the block groups can be reduced, too, the occurrence of the polygonal wear can be suppressed, as well.

### Industrial Applicability:

The present invention having the excellent effects described above can be utilized extremely effectively for pneumatic tires fitted to cars, particularly to pneumatic tires for passenger cars.

## Claims

1. A pneumatic tire of the type wherein at least one circumferential groove extending in a tire circumferential direction is disposed on a tread surface, transverse grooves extending in a tire width-wise direction are disposed at a predetermined pitch in the tire circumferential direction in such a manner that a large number of blocks are defined by said circumferential grooves and said transverse grooves and the number of different kinds of the pitch lengths determined by said transverse grooves is at least five, and a ratio Pa/Pe of the maximum pitch length Pa to the minimum pitch length Pe among said pitches is 1.5 to 1.8, characterized in that:
the ratio of the length of the pitch having a greater length to the length of a pitch having a smaller length in each pair of adjacent pitches (greater pitch length/smaller pitch length) is not greater than 1.4, and the mean value X of the sum of these ratios (greater pitch length/smaller pitch length) throughout the tire circumference satisfies the relation 1.1 ≤ X ≤ 1.3.

2. A pneumatic tire according to claim 1, wherein, when the total number of pitches is divided by 8 and the quotient is rounded off to the nearest integer value n, a ratio Lmax/Lmin of the maximum value Lmax to the minimum value Lmin is not greater than 1.3 when the total pitch lengths as the sums of the lengths of groups of n continuous pitches, each group deviated from one another by one pitch, are calculated for the total number of pitches throughout the full tire circumference.

3. A pneumatic tire according to claim 1, wherein the total number of pitches is 60 to 90.

4. A pneumatic tire according to claim 1, wherein the number of kinds of said pitch lengths is not greater than 7.

5. A pneumatic tire according to claim 1, wherein the arrangement of said pitches is a random arrangement.

6. A pneumatic tire according to claim 1, wherein said circumferential groove is straight.

7. A pneumatic tire according to claim 1, wherein the pitch arrangements are the same on the right and left sides of a tire equator.

8. A pneumatic tire according to claim 1, wherein the pitch arrangements are deviated on the right and left sides of a tire equator.

9. A pneumatic tire according to claim 1, wherein the pitch arrangements are different on the right and left sides of a tire equator.
